# EUROPEAN PATENT APPLICATION

(11) **EP 0 831 294 A1**
(43) Date of publication of application: **25.03.1998**
(21) Application number: 97202845.0
(22) Date of filing: 17.09.1997
(51) Int. Cl.: G01B 7/13, G01B 7/12, G01B 5/08, G01B 5/12

(54) **Measuring device for accurately measuring internal or external diameters or distances**

(30) Priority: 18.09.1996 NL 1004062
(71) Applicant: Pronk Beheer B.V., 3900 AC Veenendaal (NL)
(72) Inventor: Pronk, Hendrikus, 3904 PK Veenendaal (NL)
(74) Representative: de Bruijn, Leendert C.

(57) **Abstract**

A measuring device for accurately measuring diameters, distances or length and width dimensions comprises two measuring heads (3 and 4), which are arranged at a distance apart, can be displaced towards and away from one another and are each arranged on a separate parallelogram (1 and 2, respectively). There are means (13) for determining the magnitude of the displacement of the said measuring heads with respect to one another. The parallelograms adopt a parallel position with respect to one another and are connected to one another at their sides which lie opposite the sides on which the measuring heads are arranged. The sides of the parallelograms on which the measuring heads (3, 4) are arranged remain parallel to one another when the measuring heads (3, 4) are moved towards or away from one another.

## Description

The invention relates to a measuring device for accurately measuring diameters of bores or round objects, distances between two points or planes and length or width dimensions of objects, comprising: two measuring heads, which are arranged at a distance apart and can be displaced towards and away from one another, and measuring means for determining the magnitude of the displacement of the measuring heads with respect to one another.

Measuring devices of this kind are known. The means for determining the magnitude of the displacement of the measuring heads with respect to one another usually comprise a coil arranged in or on one measuring head and a core which is fastened in or on the other measuring head and projects into the coil. In the event of displacement of the core in the coil, there is a change in the electrical voltage, which is representative of the displacement of the measuring heads with respect to one another. The distance between the measuring points of the device is calibrated and the value, in microns or less, resulting from the measured voltage change, is subtracted from or added to the calibrated value. The measurement result is extremely accurate.

A known measuring device of the type referred to in the preamble presents the drawback that when the measuring heads are displaced with respect to one another the measuring heads or feelers adopt a different direction, which detracts from the measurement accuracy.

In another known measuring device, the displacement of the feeler members is transmitted to oblique end faces of a gauge pin which extends perpendicular to the feeler members and the displacement of which can be measured with the aid of a coil and a core. This design is sensitive to dirt, in particular dirt which penetrates between the feeler members and the said oblique surfaces.

The object of the invention is to provide a device as referred to in the preamble which does not present the abovementioned drawbacks and is eminently suitable for measuring the diameter of minuscule bores.

According to the invention, to this end the measuring device is characterized in that each of the measuring heads is arranged on a separate parallelogram, in that the two parallelograms are in a parallel position with respect to one another and are connected to one another at their sides which lie opposite the sides on which a measuring head is arranged, the sides of the parallelograms on which the measuring heads are arranged remaining parallel to one another when the measuring heads are moved towards or away from one another.

The feelers always retain the same direction, so that there are no measurement deviations caused by angular displacements. Since the feelers can also be fastened to the end faces of the measuring heads, the measuring device is extremely suitable for measuring very small bores.

The possibility of the two parallelograms comprising separate parts which are fastened together at their ends which are remote from the measuring heads is not ruled out. The measuring heads may also comprise separate components which are fastened to the parallelograms. However, the invention is eminently suitable for a design in which the two parallelograms and the measuring heads and a foot are formed from one piece of metal.

Usually, one of the measuring heads is provided with an opening containing a coil and the other measuring head is provided with a securing member with a metal core, which projects into the coil, arranged thereon. As an alternative, the measuring means comprise a digital read-out system, as is known for digital verniers. The measuring means (coil with core; digital read-out system and the like) may also be arranged on the feeler arms or be incorporated in the said feeler arms. These feeler arms are in turn fastened to the measuring heads.

In order easily to be able to fasten the device to a handle, a fastening strip may extend perpendicular to the parallelograms. This strip is then provided with openings into which screws or the like can be inserted.

The measuring heads may be provided with fastening means for fastening feelers.

The invention will now be explained in more detail with reference to the figures, in which:
Figure 1 shows a perspective view of the measuring device according to the invention.
Figure 2 shows a side view of the measuring heads in the inactive position.
Figure 3 shows a side view which is perpendicular to the side view of Figure 2.
Figure 4 shows a side view which is comparable to the side view of Figure 2 but in which the measuring heads are shown during the measurement.
Figure 5 shows a side view of the top part of the measuring device during the measurement of the diameter of a bore.
Figure 6 shows a side view of the top part of the measuring device during the measurement of a diameter or of an object or a distance between two planes.

The measuring device depicted is produced from one piece of metal (for example aluminium) and comprises two parallelograms 1 and 2, which are each provided on the top side with a measuring head 3 and 4, respectively. Furthermore, the parallelograms are joined together on their underside by a foot 5. There is a certain degree of space between the parallelograms.

A fastening strip 7 which is connected to the foot 5 extends perpendicular to the parallelograms and is provided with openings 8 for fastening the measuring device to a handle.

Openings 9 and 10, respectively, are made in the measuring heads 3 and 4. A coil 11, which is connected to a voltmeter 11a by a wire, is fastened in the relatively large opening 9. The small opening 10 is provided with a securing member 12, which holds a core 13 which extends through the coil 11. This core may be made of magnetic material or metal. The coil 11 and the core 12 together form a transducer, by means of which, when the measuring heads are displaced, changes in electrical voltage can be generated in the coil, which changes are representative of a change in the distance between the measuring heads, and/or feeler members fastened thereto, or measuring points. A digital read-out system may be employed instead of the coil and the core. The read-out can then be mounted directly on the handle or the housing.

Holes 14 are made in the end face of the measuring heads 3, 4, and openings 15 may be arranged in the measuring heads 3, 4 parallel to the bores 9 and 10. Both the holes 14 and the holes 15 serve to fasten feelers 16.

In the embodiment in accordance with Figure 5, the feelers 16 are fastened in the openings 15 and protrude laterally. The distance between two points or planes or - as depicted - the internal diameter of a bore 17 can be measured.

In the embodiment in accordance with Figure 6, the feelers 16 are fastened in the openings 14 and protrude in the longitudinal direction of the parallelograms 3 and 4. Both the distance between two points or planes and the internal diameter of a bore and also the external diameter of a round object 18 and the length or width dimension of an object can be measured.

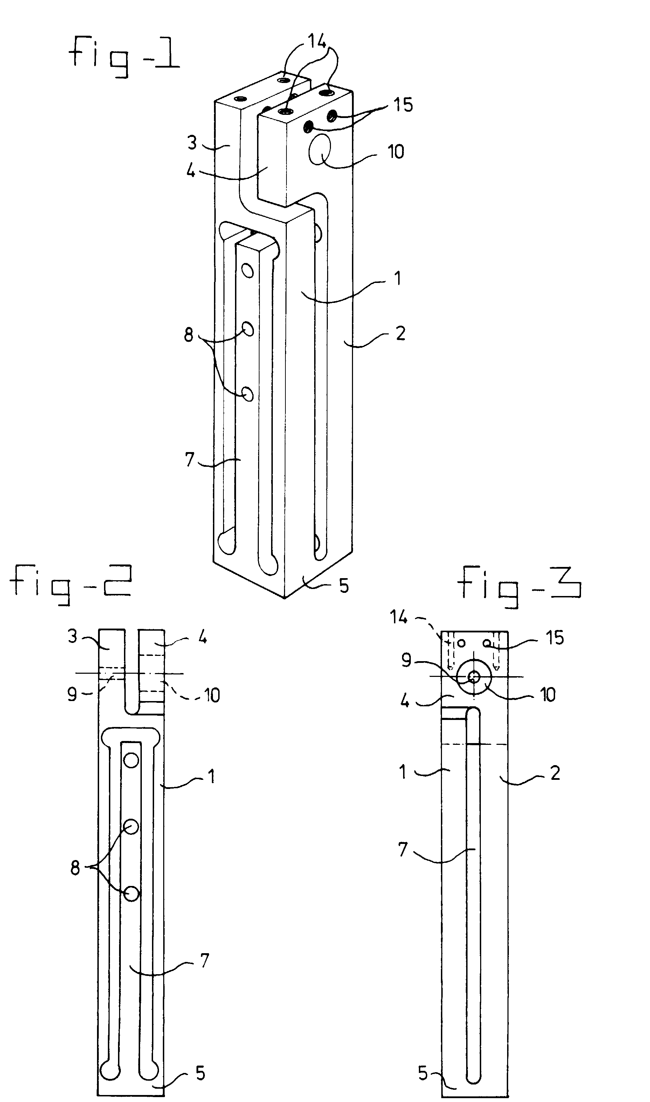

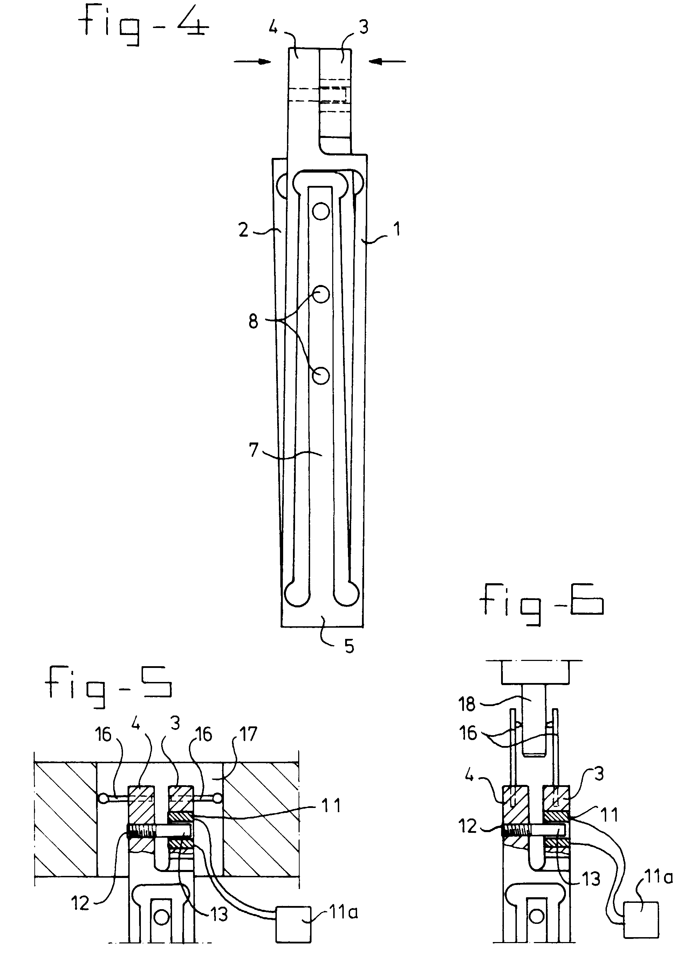

When Figures 2 and 4 are compared, it can be seen that in the event of the measuring heads being displaced with respect to one another the top faces of the parallelograms, that is to say those faces on which the measuring heads are positioned, remain parallel to one another and in their original position. This leads to a very accurate measurement result. The sensitivity to dirt is also low.

Although the measuring device could comprise more components (two parallelograms, a fastening foot and measuring heads) which are fastened together on their undersides, the embodiment shown comprises one piece of worked metal, and furthermore this embodiment is preferred.

The essential feature of the invention is the two parallel parallelograms, which can be displaced with respect to one another without the measuring heads adopting a different angular position with respect to one another.

## Claims

1. Measuring device for accurately measuring diameters of bores or round objects, distances between two points or planes and length or width dimensions of objects, comprising:
two measuring heads (3, 4), which are arranged at a distance apart and can be displaced towards and away from one another, and measuring means (11, 13) for determining the magnitude of the displacement of the measuring heads with respect to one another, characterized in that each of the measuring heads (3, 4) is arranged on a separate parallelogram (1 and 2, respectively), in that the two parallelograms are in a parallel position with respect to one another and are connected to one another at their sides which lie opposite the sides on which the measuring heads are arranged, the sides of the parallelograms on which the measuring heads (3, 4) are arranged remaining parallel to one another when the measuring heads are moved towards or away from one another.

2. Measuring device according to Claim 1, characterized in that the parallelograms (1, 2) and the measuring heads (3, 4) and a foot (5) are formed from one piece of metal.

3. Measuring device according to Claim 1 or 2, characterized in that one of the measuring heads (3) is provided with an opening (9) containing a coil (11) and the other measuring head (4) is provided with an opening (10) containing a securing member (12) to which a core (13), which projects into the coil (11), is fastened.

4. Measuring device according to Claim 1 or 2, characterized in that the measuring means comprise a digital read-out system.

5. Measuring device according to Claim 1, 2 or 3, characterized in that a fastening strip (7) extends perpendicular to the parallelograms (1, 2).

6. Measuring device according to one of the preceding claims, characterized in that the measuring heads (3, 4) are provided with bores (14, 15) for fastening feelers (16).
